# EUROPÄISCHE PATENTSCHRIFT

(11) **EP 2 743 193 B1**
(45) Veröffentlichungstag und Bekanntmachung des Hinweises auf die Patenterteilung: **27.04.2016**
(21) Anmeldenummer: 13186448.0
(22) Anmeldetag: 27.09.2013
(51) Int. Cl.: B65B 35/58, B65G 15/22, B65B 63/04, B65G 47/252, B65B 25/06

(54) **Verfahren und Vorrichtung zum Falten einer Scheibe oder einer Portion eines aufgeschnittenen Lebensmittelprodukts**
Method and device for folding a slice or a portion of a sliced food product
Procédé et dispositif de pliage d'un tranche ou d'une portion d'un produit alimentaire découpé

(30) Priorität: 12.12.2012 DE 102012222914
(43) Veröffentlichungstag der Anmeldung: 18.06.2014
(73) Patentinhaber: Weber Maschinenbau GmbH Breidenbach, 35236 Breidenbach (DE)
(72) Erfinder: Gärber, Thomas, 35216 Biedenkopf (DE); Klos, Ulrich, 35116 Hatzfeld (DE)
(74) Vertreter: Manitz, Finsterwald & Partner GbR

(56) Entgegenhaltungen:
- DE-A1- 1 454 072
- DE-A1- 10 125 737
- DE-A1-102007 041 167
- US-A- 2 822 942
- US-A1- 2005 077 150

## Beschreibung

Die vorliegende Erfindung betrifft ein Verfahren und eine Vorrichtung zum Falten einer Scheibe oder einer mehrere Scheiben umfassenden Portion eines, insbesondere mittels eines Hochgeschwindigkeitsslicers, aufgeschnittenen Lebensmittelprodukts.

Bei einer bekannten Vorrichtung zum Wenden einer Scheibe oder Portion sind zwei einander gegenüberstehende Platten vorgesehen, zwischen denen die Scheibe oder Portion gehalten wird. Zum Wenden der Scheibe oder Portion werden die Platten zusammen mit der gehaltenen Scheibe oder Portion gewendet. Anschließend wird die Scheibe oder Portion von den Platten freigegeben, so dass sie weitertransportiert werden kann. Mit einer derartigen Wendevorrichtung kann nur ein geringer Durchsatz erreicht werden. Eine aus dem Stand der Technik bekannte Wendevorrichtung ist beispielsweise in der DE 10 2008 006 333 A1 beschrieben.

Die DE 1 454 072 A1 beschreibt ein Verfahren und eine Vorrichtung zum Wenden von Fischfilets für die lagegerechte Zuführung zu einer Enthäutemaschine.

Die DE 10 2007 041 167 A1 beschreibt eine Vorrichtung zum Wenden von Produkten, wobei eine Wendestation mit einer Wendetrommel vorgesehen ist, die zwischen einem Zuführförderband und einem Abführförderband für die Produkte angeordnet ist und mittels der die Produkte gewendet werden.

Der vorliegenden Erfindung liegt die Aufgabe zugrunde, ein Verfahren und eine Vorrichtung zum Falten einer Scheibe oder einer mehrere Scheiben umfassenden Portion bereitzustellen, die einfach und kostengünstig realisierbar sind und einen hohen Produktdurchsatz erlauben.

Die Aufgabe wird durch ein Verfahren mit den Merkmalen des Anspruchs 1 und durch eine Vorrichtung mit den Merkmalen des Anspruchs 6 gelöst. Bevorzugte Weiterbildungen und Ausführungsformen der Erfindung sind in den abhängigen Ansprüchen beschrieben.

Erfindungsgemäß wird ein Verfahren zum Falten oder nicht erfindungsgemäß zum Wenden einer Scheibe oder einer mehrere Scheiben umfassenden Portion eines, insbesondere mittels eines Hochgeschwindigkeitsslicers, aufgeschnittenen Lebensmittelprodukts bereitgestellt, bei dem die Scheibe oder Portion auf einer ersten, oberen Fördereinrichtung liegend längs einer ersten Förderrichtung transportiert wird, die Scheibe oder Portion von der ersten Fördereinrichtung weg zu einer zweiten, unterhalb der ersten Fördereinrichtung angeordneten Fördereinrichtung bewegt wird, auf der die Scheibe oder Portion, insbesondere mit ihrem vorderen Ende voran, abgelegt wird, und zum Falten oder Wenden der Scheibe oder Portion die zweite Fördereinrichtung während des Ablegens zumindest zeitweise in einer zweiten Förderrichtung betrieben wird, die der ersten Förderrichtung zumindest im Wesentlichen entgegengesetzt ist.

Mit entgegengesetzten Förderrichtungen ist gemeint, dass es genügt, wenn die erste Förderrichtung und die zweite Förderrichtung bezüglich zumindest einer Bewegungskomponente entgegengesetzt gerichtet sind, d.h. lediglich nicht exakt senkrecht zueinander verlaufen. Es ist also möglich und bevorzugt, aber nicht zwingend, dass die beiden Förderrichtungen antiparallel zueinander verlaufen. Insbesondere können die Förderrichtungen also einen von 180° verschiedenen Winkel einschließen.

Der vorliegenden Erfindung liegt somit der Gedanke zugrunde, dass sich eine Scheibe oder Portion, die auf der zweiten Fördereinrichtung abgelegt wird, falten bzw. nicht erfindungsgemäß wenden lässt, wenn die zweite Fördereinrichtung während des Ablegens zumindest zeitweise entgegen der Förderrichtung der die Scheibe oder Portion heranliefernden ersten Fördereinrichtung bewegt wird.

Dabei lässt sich das erfindungsgemäße Verfahren einfach implementieren, da abgesehen von einer entsprechenden Steuerung im Wesentlichen nur die beiden Fördereinrichtungen bereitgestellt werden müssen, die ohne Weiteres in eine einem Slicer nachgeordnete Förderstecke integriert werden können oder dort bereits vorhanden sind. Außerdem lassen sich hohe Durchsätze an gefalteten Scheiben bzw. Portionen erreichen.

Bei einer gefalteten Scheibe oder Portion kommt ein Teil der Scheibe oder Portion auf einem anderen Teil der Scheibe oder Portion zu liegen.

Bevorzugt wird zum Falten der Scheibe oder Portion die Förderrichtung der zweiten Fördereinrichtung während des Ablegens wenigstens einmal von der ersten Förderrichtung in die zweite Förderrichtung, oder umgekehrt, geändert. Auf diese Weise kann die Scheibe oder Portion besonders einfach wenigstens einmal gefaltet werden.

Eine Mehrfachfaltung der Scheibe oder Portion kann insbesondere dadurch realisiert werden, dass die Förderrichtung der zweiten Fördereinrichtung während des Ablegens mehrfach geändert wird.

Vorzugsweise wird zum Falten der Scheibe oder Portion die zweite Fördereinrichtung zu Beginn des Ablegens solange in der zweiten Förderrichtung betrieben, bis ein auf der zweiten Fördereinrichtung abgelegter Teil der Scheibe oder Portion wenigstens annähernd gleich groß ist wie ein noch auf der ersten Fördereinrichtung liegender Teil der Scheibe oder Portion, und während des restlichen Ablegens wird die zweite Fördereinrichtung in der ersten Förderrichtung betrieben. Auf diese Weise kann besonders einfach die Scheibe oder Portion mittig gefaltet werden. Eine mittige Faltung ist aber nicht zwingend. Erfindungsgemäß kann die Position der "Falte" oder "Faltung" beliebig gewählt und auch von Scheibe zu Scheibe bzw. von Portion zu Portion unterschiedlich gewählt werden.

Die zweite Fördereinrichtung kann während des Ablegens zum Falten der Scheibe oder Portion auch zunächst in der ersten Förderrichtung und dann erst in der zweiten Förderrichtung betrieben werden. Es ist also nicht zwingend erforderlich, dass die zweite Fördereinrichtung zu Beginn des Ablegens der Portion oder Scheibe in der zweiten Förderrichtung betrieben wird. Vielmehr reicht es zum Falten der Scheibe oder Portion aus, wenn die zweite Fördereinrichtung während des Ablegevorgangs zeitweise in der zweiten Förderrichtung betrieben wird.

Nicht erfindungsgemäß wird bevorzugt zum Wenden der Scheibe oder Portion die zweite Fördereinrichtung während des gesamten Ablegevorgangs in der zweiten Förderrichtung betrieben. Die Scheibe oder Portion kann somit auf einfache Weise gewendet werden.

Nach Abschluss des Ablegens kann die Scheibe oder Portion entlang der ersten Förderrichtung abtransportiert werden. Die Scheibe oder Portion kann zum Beispiel einer der zweiten Fördereinrichtung nachgeordneten Verpackungseinrichtung zugeführt werden. Prinzipiell ist aber auch ein Abtransport in der zweiten Förderrichtung denkbar.

Bei einer bevorzugten Ausgestaltung der Erfindung werden die erste Fördereinrichtung und die zweite Fördereinrichtung zumindest annähernd mit betragsmäßig gleichen Geschwindigkeiten betrieben. Dadurch kann verhindert werden, dass die Scheibe oder Portion durch unterschiedlich schnell betriebene Fördereinrichtungen auseinandergezogen wird. Insbesondere kann bezüglich einer Portion verhindert werden, dass die Portion unterteilt wird oder die die Portion bildenden Scheiben voneinander separiert werden. Alternativ kann aber eine unterschiedliche Geschwindigkeit der beiden Fördereinrichtungen auch gezielt eingesetzt werden, um bestimmte Scheiben- bzw. Portionsbilder zu erzielen.

Vorzugsweise wird die Scheibe oder Portion über ein freies Ende der ersten Fördereinrichtung hinaus transportiert, so dass sich die Scheibe oder Portion, insbesondere aufgrund der Wirkung der Schwerkraft, in Richtung der unterhalb der ersten Fördereinrichtung angeordneten zweiten Fördereinrichtung bewegt. Die Scheibe oder Portion kann somit unter Ausnutzung der Schwerkraft und/oder durch den Einsatz einer oder mehrerer zusätzlicher Hilfsförderer oder Umlenkeinrichtungen von der oberen, ersten Fördereinrichtung zur unteren, zweiten Fördereinrichtung bewegt werden.

Es nicht zwingend erforderlich, dass die zweite Fördereinrichtung unterhalb der ersten Fördereinrichtung angeordnet ist. Die zweite Fördereinrichtung kann auch oberhalb der ersten Fördereinrichtung vorgesehen sein, wobei geeignete Förder- oder Umlenkmittel vorgesehen sind, um die Scheibe oder Portion von der unteren Fördereinrichtung auf die obere Fördereinrichtung zu führen. Die Scheibe oder Portion kann dann z.B. mittels eines Förderers in Form eines Teil-Loopings von der ersten Fördereinrichtung nach oben auf die zweite Fördereinrichtung bewegt werden. Die Scheibe oder Portion vollführt hierdurch gewissermaßen eine Art teilweisen "Rückwärts-Salto" von der unteren auf die obere Fördereinrichtung.

Die Erfindung betrifft außerdem eine Vorrichtung zum Falten oder nicht erfindungsgemäß zum Wenden einer Scheibe oder einer mehrere Scheiben umfassenden Portion eines, insbesondere mittels eines Hochgeschwindigkeitsslicers, aufgeschnittenen Lebensmittelprodukts, mit einer ersten, oberen Fördereinrichtung zum Transportieren der auf der ersten Fördereinrichtung liegenden Scheibe oder Portion längs einer ersten Förderrichtung, wobei die Scheibe oder Portion von der ersten Fördereinrichtung weg zu einer zweiten, unterhalb der ersten Fördereinrichtung angeordneten Fördereinrichtung bewegbar ist, auf der die Scheibe oder Portion abgelegt werden kann, und wobei die zweite Fördereinrichtung zum Falten oder nicht erfindungsgemäß zum Wenden der Scheibe oder Portion während des Ablegens zumindest zeitweise in einer zweiten Förderrichtung betreibbar ist, die der ersten Förderrichtung entgegengesetzt ist.

Die Erfindung wird nachfolgend rein beispielhaft unter Bezugnahme auf die beiliegenden Zeichnungen beschrieben. Es zeigen, jeweils schematisch,
- Fig. 1 bis 4: den Ablauf eines von einer Ausführungsform einer erfindungsgemäßen Vorrichtung an einer Portion durchgeführten Faltvorgangs,
- Fig. 5: eine alternative Ausführungsform einer erfindungsgemäßen Vorrichtung,
- Fig. 6 und 7: den Ablauf eines von einer weiteren Ausführungsform einer erfindungsgemäßen Vorrichtung an einer Portion ausgeführten Faltvorgangs, und
- Fig. 8: noch eine weitere Ausführungsform einer erfindungsgemäßen Vorrichtung.

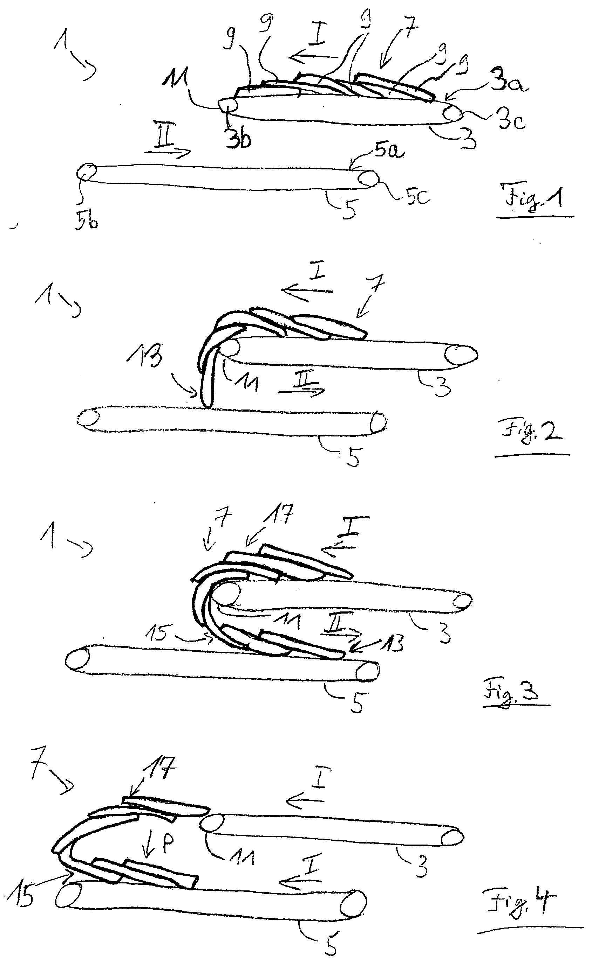

Die in den Fig. 1 bis 4 dargestellte Vorrichtung 1 weist eine erste, obere Fördereinrichtung 3 und eine darunter angeordnete zweite, untere Fördereinrichtung 5 auf. Die erste Fördereinrichtung 3 ist einem nicht dargestellten Hochgeschwindigkeitsslicer nachgeordnet, der zum Aufschneiden eines Lebensmittelprodukts, wie etwa Käse oder Wurst, vorgesehen ist und der die beim Aufschneiden abgetrennten Scheiben einzeln oder in Form von mehrere geschindelt oder gestapelt angeordnete Scheiben umfassenden Portionen der Vorrichtung 1 bereitstellt.

Die erste Fördereinrichtung 3 weist in an sich bekannter Weise eine Auflagefläche 3a für die Scheiben oder Portionen auf. Die Auflagefläche 3a kann beispielsweise von mehreren parallel nebeneinander verlaufenden Förderriemen gebildet sein, die um eine erste und zweite Umlenkrolle 3b, 3c umlaufen. In der entsprechenden Weise weist die zweite Fördereinrichtung 5 in an sich bekannter Weise eine um erste und zweite Umlenkrollen 5b, 5c umlaufende Auflagefläche 5a auf, die wiederum von mehreren parallel nebeneinander verlaufenden Förderriemen gebildet sein kann.

Grundsätzlich können aber auch jeweils durchgehende Förderbänder anstelle von einzelnen, nebeneinander mit Abstand angeordneten Förderriemen vorgesehen sein.

In Fig. 1 ist eine auf der oberen Fördereinrichtung 3 liegende Portion 7 dargestellt, die aus mehreren geschindelten Scheiben 9 besteht. Die Portion 7 kann zum Beispiel vom Slicer her kommend längs einer ersten Fördereinrichtung I eingelaufen sein. Die Fördereinrichtung 3 transportiert die Portion 7 längs der ersten Förderrichtung I über ein freies Ende 11 der ersten Fördereinrichtung 3 hinaus. Dadurch bewegt sich die Portion 7 aufgrund der Wirkung der Schwerkraft nach unten in Richtung der zweiten Fördereinrichtung 5 (vgl. die Fig. 2 und 3), auf der die Portion 7 abgelegt wird (vgl. insbesondere Fig. 4).

Um die Portion 7 zu falten, wird die zweite Fördereinrichtung 5 zu Beginn des Ablegevorgangs zunächst in einer zweiten Förderrichtung II betrieben, die der ersten Förderrichtung I entgegengesetzt ist. Wie die Fig. 2 und 3 zeigen, wird dabei der auf der zweiten Fördereinrichtung 5 einlaufende Anfang 13 der Portion 7 von der unteren Fördereinrichtung 5 in die zweite Förderrichtung II gefördert. Dabei wird der Portionsanfang 13 gewendet, da dessen bisherige Unterseite oben liegt, wenn der Portionsanfang 13 auf der zweiten Fördereinrichtung 5 zu liegen kommt.

Die untere Fördereinrichtung 5 wird solange in der zweiten Förderrichtung II betrieben, bis ein auf der zweiten Fördereinrichtung 5 abgelegter Teil 15 der Portion 7 wenigstens annähernd gleich groß ist wie ein noch auf der oberen Fördereinrichtung 3 liegender Teil 17 der Portion 7. Dann wird die Förderrichtung der zweiten Fördereinrichtung 5 umgekehrt und die zweite Fördereinrichtung 5 wird während des restlichen Ablegevorgangs in der ersten Förderrichtung I betrieben. Wie die Fig. 4 zeigt, werden der noch auf der ersten Fördereinrichtung 3 verbliebene Portionsteil 17 und der bereits auf der zweiten Fördereinrichtung 5 liegende Portionsteil 15 somit in die gleiche Förderrichtung bewegt. Dabei legt sich der Portionsteil 17, wie der Pfeil P andeutet, auf den Portionsteil 15, so dass eine in etwa mittig gefaltete Portion 7 auf der zweiten Fördereinrichtung 5 gebildet wird.

Anschließend wird die gefaltete Portion 7 längs der ersten Förderrichtung I weitergefördert und zum Beispiel einer nicht gezeigten, nachgeordneten Verpackungseinrichtung zugeführt.

Zum Falten der Portion 7 ist es nicht notwendig, dass die untere Fördereinrichtung 5 zu Beginn des Ablegens in die zweite Förderrichtung II betrieben wird. Vielmehr kann die zweite Fördereinrichtung 5 zu Beginn des Ablegens auch in der ersten Förderrichtung I betrieben werden, bis ein Teil der Portion 7 auf ihr abgelegt ist. Erst dann kann die Förderrichtung der unteren Fördereinrichtung 5 in die zweite Förderrichtung II umgekehrt werden, um die Portion 7 zu falten. Während des Ablegens der Portion 7 kann die Bewegungsrichtung der unteren Fördereinrichtung 5 auch mehrfach zwischen der ersten und zweiten Förderrichtung I, II umgekehrt werden, so dass auf der zweiten Fördereinrichtung 5 eine mehrfach gefaltete Portion 7 gebildet wird.

Die Vorrichtung 1 lässt sich nicht nur zum Falten, sondern auch nicht erfindungsgemäß zum Wenden der Portion 7 verwenden, indem die untere Fördereinrichtung 5 während des gesamten Ablegevorgangs in der zweiten Förderrichtung II betrieben wird. Nach Abschluss des Ablegens der Portion 7 auf der zweiten Fördereinrichtung 5 kann dann deren Förderrichtung zum Abtransport der gewendeten Portion 7 in die erste Förderrichtung I umgekehrt werden.

Auf das Wenden oder Falten der Portion 7 gemäß dem vorstehend beschriebenen Ablauf wirkt sich vorteilhaft aus, dass die die Portion 7 bildenden Scheiben 9, bei denen es sich insbesondere um Wurst- oder Käsescheiben handelt, normalerweise aufgrund ihrer Konsistenz aneinander haften, so dass sich die Scheiben 9 insbesondere während des Ablegevorgangs nicht voneinander separieren.

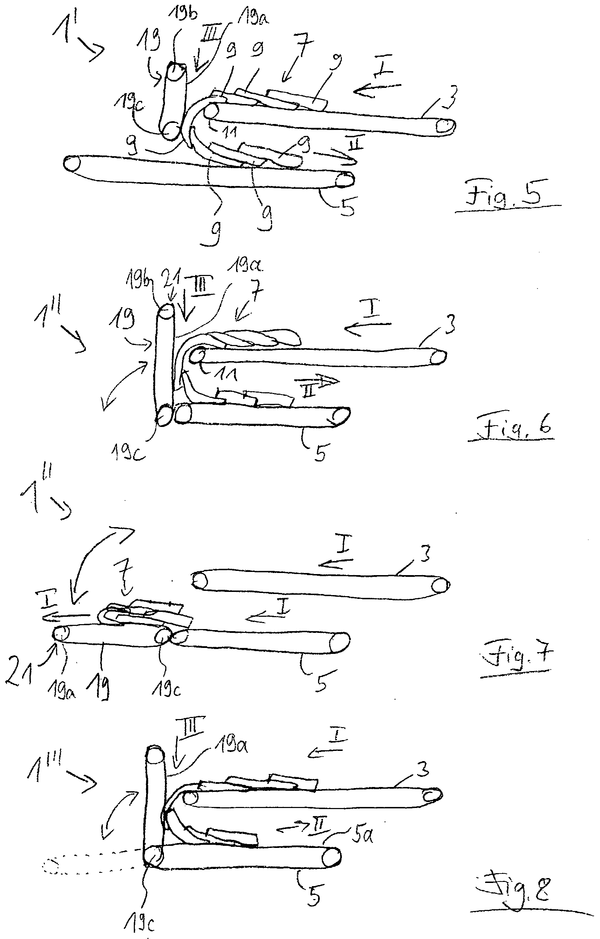

Im Unterschied zu der in den Fig. 1 bis 4 dargestellten Vorrichtung 1 weist die Vorrichtung 1' der Fig. 5 zusätzlich noch eine dritte Fördereinrichtung 19 auf, die in einem Abstand vor dem freien Ende 11 der oberen Fördereinrichtung 3 angeordnet ist. Dabei ist eine um Umlenkrollen 19b, 19c umlaufende Auflagefläche 19a vertikal ausgerichtet, so dass die über das freie Ende 11 hinaus geförderte Portion 7 gegen die Auflagefläche 19a stößt und nach unten umgelenkt bzw. gefördert werden kann, während die dritte Fördereinrichtung 19 mit nach unten gerichteter dritter Förderrichtung III betrieben wird. Die Vorrichtung 1' eignet sich besonders gut zum Wenden einer Scheibe oder Portion, wobei die zweite Fördereinrichtung 5 und die dritte Fördereinrichtung 19 vom Beginn bis zum Ende des Ablegevorgangs in der zweiten bzw. dritten Förderrichtung II, III betrieben werden.

Die dritte Fördereinrichtung 19 ist gegenüber der vorstehend beschriebenen Vorrichtung 1' bei der in den Fig. 6 und 7 dargestellten Vorrichtung 1" abgewandelt. Die dritte Fördereinrichtung 19 ist bei der Vorrichtung 1" in der ersten Förderrichtung I gesehen der unteren Fördereinrichtung 5 nachgeordnet, sodass eine auf der zweiten Fördereinrichtung 5 abgelegte gefaltete oder gewendete Portion 7 in Förderrichtung I an die dritte Fördereinrichtung 19 übergeben und von dieser in Förderrichtung I weitertransportiert werden kann (vgl. Fig. 7). Ein von der unteren Fördereinrichtung 5 abgewandtes Ende 21 der dritten Fördereinrichtung 19 kann um etwa 90° nach oben verschwenkt werden (vgl. Fig. 6), so dass sich die Fördereinrichtung 19 in der mit Bezug auf die Fig. 5 beschrieben Art und Weise einsetzen lässt.

Im Unterschied zu der Vorrichtung 1" der Fig. 6 und 7 teilen sich bei der in Fig. 8 gezeigten Vorrichtung 1'" die zweite Fördereinrichtung 5 und die dritte Fördereinrichtung 19 die Umlenkrolle 19c. Die die Auflagefläche 5a der zweiten Fördereinrichtung 5 bildenden Förderriemen und die die Auflagefläche 19a der dritten Fördereinrichtung 19 bildenden Förderriemen werden somit von derselben Umlenkrolle 19c umgelenkt, wodurch Bauraum eingespart werden kann.

Bevorzugt werden bei den beschriebenen Vorrichtungen 1, 1', 1" und 1"' die erste, zweite und, soweit vorhanden, dritte Fördereinrichtung 3, 5, 19 mit den betragsmäßig gleichen Geschwindigkeiten betrieben, wodurch ein "Zerfließen" einer Portion 7 in ihre Bestandteile, also ein Auseinanderdriften der einzelnen Scheiben 9, insbesondere während des Ablegevorgangs, verhindert wird.

Mit den beschriebenen Vorrichtungen 1, 1', 1" und 1'" können nicht nur Portionen, sondern auch einzelne Scheiben gefaltet oder nicht erfindungsgemäß gewendet werden.

### Bezugszeichenliste

- 1: Vorrichtung
- 3: erste, obere Fördereinrichtung
- 3a: Auflagefläche
- 3b: erste Umlenkrolle
- 3c: zweite Umlenkrolle
- 5: zweite, untere Fördereinrichtung
- 5a: Auflagefläche
- 5b: erste Umlenkrolle
- 5c: zweite Umlenkrolle
- 7: Portion
- 9: Scheibe
- 11: freies Ende
- 13: Portionsanfang
- 15: Portionsteil
- 17: Portionsteil
- 19: dritte Fördereinrichtung
- 19a: Auflagefläche
- 19b: erste Umlenkrolle
- 19c: zweite Umlenkrolle
- 21: Ende der dritten Fördereinrichtung

- I: erste Förderrichtung
- II: zweite Förderrichtung
- III: dritte Förderrichtung

- P: Pfeil

## Patentansprüche

1. Verfahren zum Falten einer Scheibe oder einer mehrere Scheiben (9) umfassenden Portion (7) eines, insbesondere mittels eines Hochgeschwindigkeitsslicers, aufgeschnittenen Lebensmittelprodukts, bei dem
die Scheibe oder Portion (7) auf einer ersten, oberen Fördereinrichtung (3) liegend längs einer ersten Förderrichtung (I) transportiert wird,
die Scheibe oder Portion (7) von der ersten Fördereinrichtung (3) weg zu einer zweiten, unterhalb der ersten Fördereinrichtung (3) angeordneten Fördereinrichtung (5) bewegt wird, auf der die Scheibe oder Portion (7) abgelegt wird, und
zum Falten der Scheibe oder Portion (7) die zweite Fördereinrichtung (5) während des Ablegens zumindest zeitweise in einer zweiten Förderrichtung (II) betrieben wird, die der ersten Förderrichtung (I) zumindest im Wesentlichen entgegengesetzt ist, und
wobei zum Falten der Scheibe oder Portion (7) die Förderrichtung der zweiten Fördereinrichtung (5) während des Ablegens wenigstens einmal von der ersten Förderrichtung (I) in die zweite Förderrichtung (II), oder umgekehrt, geändert wird.

2. Verfahren nach Anspruch 1,
**dadurch gekennzeichnet, dass** zum Falten der Scheibe oder Portion (7) die zweite Fördereinrichtung (5) zu Beginn des Ablegens solange in der zweiten Förderrichtung (II) betrieben wird, bis ein auf der zweiten Fördereinrichtung (5) abgelegter Teil (15) der Scheibe oder Portion (7) wenigstens annähernd gleich groß ist wie ein noch auf der ersten Fördereinrichtung (3) liegender Teil der Scheibe oder Portion (7), und dass die zweite Fördereinrichtung (5) während des restlichen Ablegens in der ersten Förderrichtung (I) betrieben wird.

3. Verfahren nach einem der vorhergehenden Ansprüche,
**dadurch gekennzeichnet, dass** nach Abschluss des Ablegens die Scheibe oder Portion (7) entlang der ersten Förderrichtung (I) abtransportiert wird.

4. Verfahren nach einem der vorhergehenden Ansprüche,
**dadurch gekennzeichnet, dass** die erste Fördereinrichtung (3) und die zweite Fördereinrichtung (5) zumindest annähernd mit betragsmäßig gleichen Geschwindigkeiten betrieben werden.

5. Verfahren nach einem der vorhergehenden Ansprüche,
**dadurch gekennzeichnet, dass** die Scheibe oder Portion (7) über ein freies Ende (11) der ersten Fördereinrichtung (3) hinaus transportiert wird, so dass sich die Scheibe oder Portion (7), insbesondere aufgrund der Wirkung der Schwerkraft, in Richtung der unterhalb der ersten Fördereinrichtung (3) angeordneten zweiten Fördereinrichtung (5) bewegt.

6. Vorrichtung (1, 1', 1", 1"') zum Falten einer Scheibe oder einer mehrere Scheiben (9) umfassenden Portion (7) eines, insbesondere mittels eines Hochgeschwindigkeitsslicers, aufgeschnittenen Lebensmittelprodukts, mit
einer ersten, oberen Fördereinrichtung (3) zum Transportieren der auf der ersten Fördereinrichtung liegenden Scheibe oder Portion (7) längs einer ersten Förderrichtung (I), wobei die Scheibe oder Portion (7) von der ersten Fördereinrichtung (3) weg zu einer zweiten, unterhalb der ersten Fördereinrichtung (3) angeordneten Fördereinrichtung (5) bewegbar ist, auf der die Scheibe oder Portion (7) abgelegt werden kann, und
wobei die zweite Fördereinrichtung (5) zum Falten der Scheibe oder Portion (7) während des Ablegens zumindest zeitweise in einer zweiten Förderrichtung (II) betreibbar ist, die der ersten Förderrichtung (I) zumindest im Wesentlichen entgegengesetzt ist, und wobei die Förderrichtung bei der zweiten Fördereinrichtung (5) zum Falten der Scheibe oder Portion (7) während des Ablegens bei einem noch auf der oberen Fördereinrichtung liegenden Teil der Scheibe oder Portion (7) wenigstens einmal von der ersten Förderrichtung (I) in die zweite Förderrichtung (II), oder umgekehrt, geändert werden kann.

7. Vorrichtung nach Anspruch 6,
**dadurch gekennzeichnet, dass** die zweite Fördereinrichtung (5) zum Falten der Scheibe oder Portion (7) ab dem Beginn des Ablegens solange in der zweiten Förderrichtung (II) betreibbar ist, bis ein auf der zweiten Fördereinrichtung (5) abgelegter Teil (15) der Scheibe oder Portion (7) wenigstens annähernd gleich groß ist wie ein noch auf der ersten Fördereinrichtung (3) liegender Teil (17) der Scheibe oder Portion (7), und dass die zweite Fördereinrichtung (5) während des restlichen Ablegens in der ersten Förderrichtung (I) betreibbar ist.

8. Vorrichtung nach Anspruch 6 oder 7,
**dadurch gekennzeichnet, dass** die erste und zweite Fördereinrichtung (3, 5) mit zumindest annähernd betragsmäßig gleichen Geschwindigkeiten betreibbar sind.

9. Vorrichtung nach einem der Ansprüche 6 bis 8,
**dadurch gekennzeichnet, dass** die erste Fördereinrichtung (3) ein freies Ende (11) aufweist, über das hinaus die Scheibe oder Portion (7) transportierbar ist, so dass die Scheibe oder Portion (7), insbesondere aufgrund der Wirkung der Schwerkraft, nach unten in Richtung der unterhalb der ersten Fördereinrichtung (3) angeordneten zweiten Fördereinrichtung (5) bewegt wird.

10. Vorrichtung nach einem der Ansprüche 6 bis 9,
**dadurch gekennzeichnet dass** eine dritte Fördereinrichtung (19) in einem Abstand vor dem freien Ende (11) der ersten Fördereinrichtung (3) angeordnet ist oder angeordnet werden kann, um die Scheibe oder Portion (7) von der ersten Fördereinrichtung (3) in Richtung der zweiten Fördereinrichtung (5) umzulenken.

11. Vorrichtung nach Anspruch 10,
**dadurch gekennzeichnet, dass** die dritte Fördereinrichtung (19) in der ersten Förderrichtung (I) gesehen der zweiten Fördereinrichtung (5) nachgeordnet ist, wobei ein von der zweiten Förderrichtung (5) abgewandtes Ende (11) der dritten Fördereinrichtung (19) noch oben verschwenkbar ist, und/oder dass die zweite Fördereinrichtung (5) und die dritte Fördereinrichtung (19) eine gemeinsame Umlenkeinrichtung (19a) für Förderriemen aufweisen.

## Claims

1. A method for the folding of a slice or of a portion (7) comprising a plurality of slices (9) of a sliced food product, in particular sliced by means of a high-performance slicer, in which
the slice or portion (7) is transported in a lying manner on a first, upper conveying device (3) along a first conveying direction (I); the slice or portion (7) is moved away from the first conveying device (3) to a second conveying device (5) which is arranged beneath the first conveying device (3) and on which the slice or portion (7) is placed down; and,
for the folding of the slice or portion (7), the second conveying device (5) is operated at least at times during the placing down in a second conveying direction (II) which is at least substantially opposite to the first conveying direction (I); and
wherein, for the folding of the slice or portion (7), the conveying direction of the second conveying device (5) is varied during the placing down at least once from the first conveying direction (I) to the second conveying direction (II), or vice versa.

2. A method in accordance with claim 1,
**characterized in that**,
for the folding of the slice or portion (7), the second conveying device (5) is operated in the second conveying direction (II) at the start of the placing down for so long until a part (15) of the slice or portion (7) placed down on the second conveying device (5) is at least approximately as large as a part of the slice or portion (7) still lying on the first conveying device (3); and **in that** the second conveying device (5) is operated in the first conveying direction (I) during the remaining placing down.

3. A method in accordance with one of the preceding claims, **characterized in that**
the slice or portion (7) is transported away along the first conveying direction (I) after the completion of the placing down.

4. A method in accordance with any one of the preceding claims, **characterized in that**
the first conveying device (3) and the second conveying device (5) are operated at least approximately at the same speeds by magnitude.

5. A method in accordance with any one of the preceding claims, **characterized in that**
the slice or portion (7) is transported beyond a free end (11) of the first conveying device (3) so that the slice or portion (7) moves, in particular due to the effect of gravity, in the direction of the second conveying device (5) arranged beneath the first conveying device (3).

6. An apparatus (1, 1', 1", 1"') for the folding of a slice or of a portion (7) comprising a plurality of slices (9) of a sliced food product, in particular sliced by means of a high-performance slicer, having a first, upper conveying device (3) for transporting the slice or portion (7) lying on the first conveying device along a first conveying direction (I), wherein the slice or portion (7) is movable away from the first conveying device (3) to a second conveying device (5) which is arranged beneath the first conveying device (3) and on which the slice or portion (7) can be placed down, and
wherein, for the folding of the slice or portion (7), the second conveying device (5) can be operated at least at times during the placing down in a second conveying direction (II) which is at least substantially opposite the first conveying direction (I); and wherein the conveying direction can be varied with the second conveying device (5) at least once from the first conveying direction (I) to the second conveying direction (II), or vice versa, for the folding of the slice or portion (7) during the placing down with a part of the slice or portion (7) still lying on the upper conveying device.

7. An apparatus in accordance with claim 6,
**characterized in that**,
for the folding of the slice or portion (7), the second conveying device (5) is operable in the second conveying direction (II) from the start of the placing down for so long until a part (15) of the slice or portion (7) placed down on the second conveying device (5) is at least approximately as large as a part (17) of the slice or portion (7) lying on the first conveying device (3); and **in that** the second conveying device (5) is operable in the first conveying direction (I) during the remaining placing down.

8. An apparatus in accordance with claim 6 or claim 7, **characterized in that**
the first and second conveying devices (3, 5) are operable at at least approximately the same speeds by magnitude.

9. An apparatus in accordance with any one of the claims 6 to 8, **characterized in that**
the first conveying device (3) has a first free end (11) beyond which the slice or portion (7) can be transported such that the slice or portion (7) is moved downward, in particular due to the effect of gravity, in the direction of the second conveying device (5) arranged beneath the first conveying device (3).

10. An apparatus in accordance with any one of the claims 6 to 9, **characterized in that**
a third conveying device (19) is arranged or can be arranged at a spacing from the free end (11) of the first conveying device (3) to deflect the slice or portion (7) from the first conveying device (3) in the direction of the second conveying device (5).

11. An apparatus in accordance with claim 10,
**characterized in that**
the third conveying device (19) is arranged downstream of the second conveying device (5) viewed in the first conveying direction (I), with an end (11) of the third conveying device (19) remote from the second conveying device (5) being pivotable upward; and/or **in that** the second conveying device (5) and the third conveying device (19) have a common deflection device (19a) for conveyor belts.

## Revendications

1. Procédé pour plier une tranche ou une portion (7) incluant plusieurs tranches (9) d'un produit alimentaire découpé, en particulier au moyen d'une trancheuse à haute vitesse, dans lequel
la tranche ou la portion (7) est transportée, posée sur un premier moyen de convoyage supérieur (3), le long d'une première direction de convoyage (I),
la tranche ou la portion (7) est déplacée en éloignement du premier moyen de convoyage (3) vers un second moyen de convoyage (5) agencé au-dessous du premier moyen de convoyage (3), la tranche ou la portion (7) étant déposée sur ce second moyen de convoyage, et pour plier la tranche ou la portion (7), le second moyen de convoyage (5) est amené à fonctionner pendant la dépose au moins temporellement dans une seconde direction de convoyage (II) qui est au moins sensiblement opposée à la première direction de convoyage (I), et
dans lequel pour plier la tranche ou la portion (7) la direction de convoyage du second moyen de convoyage (5) est modifiée pendant la dépose au moins une fois de la première direction de convoyage (I) vers la seconde direction de convoyage (II) ou inversement.

2. Procédé selon la revendication 1,
**caractérisé en ce que** pour plier la tranche ou la portion (7) le second moyen de convoyage (5) est amené à fonctionner, au commencement de la dépose, dans la seconde direction de convoyage (II) aussi longtemps qu'une partie (15) de la tranche ou de la portion (7) déposée sur le second moyen de convoyage (5) soit au moins approximativement aussi grande qu'une partie de la tranche ou de la portion (7) qui repose encore sur le premier moyen de convoyage (3), et **en ce que** le second moyen de convoyage (5) est amené à fonctionner, pendant le reste de la dépose, dans la première direction de convoyage (I).

3. Procédé selon l'une des revendications précédentes,
**caractérisé en ce qu'**après terminaison de la dépose la tranche ou la portion (7) est transportée en éloignement le long de la première direction de convoyage (I).

4. Procédé selon l'une des revendications précédentes,
**caractérisé en ce que** le premier moyen de convoyage (3) et le second moyen de convoyage (5) sont amenés à fonctionner au moins approximativement avec des vitesses égales en valeur absolue.

5. Procédé selon l'une des revendications précédentes,
**caractérisé en ce que** la tranche ou la portion (7) est transportée au-delà d'une extrémité libre (11) du premier moyen de convoyage (3), de telle sorte que la tranche ou la portion (7) se déplace, en particulier en raison de l'effet de la pesanteur, en direction du second moyen de convoyage (5) agencé au-dessous du premier moyen de convoyage (3).

6. Dispositif (1, 1', 1", 1"') pour plier une tranche ou une portion (7) incluant plusieurs tranches (9) d'un produit alimentaire découpé, en particulier au moyen d'une trancheuse à haute vitesse, comprenant un premier moyen de convoyage supérieur (3) pour transporter la tranche ou la portion (7) reposant sur le premier moyen de convoyage le long d'une première direction de convoyage (I), et la tranche ou la portion (7) peut être déplacée en éloignement du premier moyen de convoyage (3) vers un second moyen de convoyage (5) agencé au-dessous du premier moyen de convoyage (3), de sorte que la tranche ou la portion (7) peut être déposée sur ce second moyen de convoyage (5),
et
dans lequel le second moyen de convoyage (5) est amené à fonctionner, pour plier la tranche ou la portion (7) pendant la dépose, au moins temporairement dans une seconde direction de convoyage (II) qui est au moins sensiblement opposée à la première direction de convoyage (I), et
dans lequel la direction de convoyage du second moyen de convoyage (5), pour plier la tranche ou la portion (7), peut être modifiée pendant la dépose, alors qu'une partie de la tranche de la portion (7) repose encore sur le moyen de convoyage supérieur, au moins une fois de la première direction de convoyage (I) vers la seconde direction de convoyage (II), ou inversement.

7. Dispositif selon la revendication 6,
**caractérisé en ce que** le second moyen de convoyage (5), pour plier la tranche ou la portion (7), peut être amené à fonctionner à partir du début de la dépose dans la seconde direction de convoyage (II) aussi longtemps qu'une partie (15) de la tranche ou de la portion (7) déposée sur le second moyen de convoyage (5) soit au moins approximativement de même taille qu'une partie (17) de la tranche ou de la portion (7) qui repose encore sur le premier moyen de convoyage (3), et **en ce que** le second moyen de convoyage (5) peut être amené, pendant le reste de la dépose, à fonctionner dans la première direction de convoyage (I).

8. Dispositif selon la revendication 6 ou 7,
**caractérisé en ce que** le premier et le second moyen de convoyage (3, 5) peuvent être amenés à fonctionner avec des vitesses au moins approximativement égales en valeur absolue.

9. Dispositif selon l'une des revendications 6 à 8,
**caractérisé en ce que** le premier moyen de convoyage (3) comporte une extrémité libre (11) au-delà de laquelle la tranche ou la portion (7) peut être transportée, de sorte que la tranche ou la portion (7) est déplacée, en particulier en raison de l'effet de la pesanteur, vers le bas en direction du second moyen de convoyage (5) agencé au-dessous du premier moyen de convoyage (3).

10. Dispositif selon l'une des revendications 6 à 9,
**caractérisé en ce qu'**un troisième moyen de convoyage (19) est agencé ou peut être agencé à distance devant l'extrémité libre (11) du premier moyen de convoyage (3), afin de faire dévier la tranche ou la portion (7) depuis le premier moyen de convoyage (3) en direction du second moyen de convoyage (5).

11. Dispositif selon la revendication 10,
**caractérisé en ce que** le troisième moyen de convoyage (19) est agencé, vu dans la première direction de convoyage (I), après le second moyen de convoyage (5), et une extrémité (11), détournée du second moyen de convoyage (5), du troisième moyen de convoyage (19) est susceptible d'être pivotée vers le haut, et/ou **en ce que** le second moyen de convoyage (5) et le troisième moyen de convoyage (19) comprennent un moyen de déviation commun (19a) pour des courroies de convoyage.
